# EUROPEAN PATENT APPLICATION

(11) **EP 0 903 676 A2**
(43) Date of publication of application: **24.03.1999**
(21) Application number: 98307319.8
(22) Date of filing: 10.09.1998
(51) Int. Cl.: G06F 17/30

(54) **Identifying optimal thumbnail images for video search hitlist**

(30) Priority: 17.09.1997 US 931984
(71) Applicant: SUN MICROSYSTEMS, INC., Palo Alto, California 94303 (US)
(72) Inventor: Nielsen, Jakob, Atherton, California 94027 (US)
(74) Representative: Read, Matthew Charles

(57) **Abstract**

A video database is indexed using the terms of closed-captioning which accompany the video components of the video database. When a query is run against the video database, a list of hits, corresponding to video components relevant to the query, are presented to the user by selecting a representative image from each video component in the hitlist and presenting the representative images to the user in an array of thumbnail images with the corresponding closed-captioned text.

## Description

### BACKGROUND OF THE INVENTION

### Field of the Invention

The invention relates to information retrieval systems and, more particularly, to the presentation and selection of representative images of video components identified as hits in a video database in response to a user query.

### Description of Related Art

Information retrieval systems are known. Particularly, information retrieval systems based on full text indexing of the underlying documents are known.

Similarly, databases of video information are known. Typically, these include images or video clips or full video recordings (hereinafter collectively video clip(s)) which have been manually indexed with appropriate keywords to enable video clips which might contain desired images to be retrieved in response to a user query.

Closed-captioning of video presentations or video recordings is also known in the art in which the actual words or sounds presented on an audio track of a related video presentation are presented as digital information. Typically, the digital information is prepared by a person who listens to the audio presentation and, like a court reporter, transcribes the words or provides a description of what is occurring.

### The Problems

The prior art is less than optimal because of the difficulty not only in indexing the video information, which tends to be manual, but also in the presentation of search results to a user. Typically, video information can only be presented one image at a time thus resulting in a slow and laborious process of reviewing images that might have been retrieved in response to a query against the video database.

### SUMMARY OF THE INVENTION

The invention relates to techniques for presenting visually the results of a query run against a video database using an information retrieval system. The closed-captioning information accompanying a video program or video recording is utilized to index the images for retrieval. Thus, when a textual query is submitted, a search is run against the closed-captioned information to identify one or more video clips which might contain image information relevant to the query. A representative image of each video recording or video clip is processed into thumbnail size and placed in an array together with the portion of the closed-captioning material which resulted in the selection of that image for display.

The foregoing and other features, aspects and advantages of the present invention will become more apparent from the following detailed description of the present invention when taken in conjunction with the accompanying drawings.

### BRIEF DESCRIPTION OF THE DRAWINGS

The objects, features and advantages of the system of the present invention will be apparent from the following description in which:

**Figure 1A** is a view of exemplary computer system suitable for use in carrying out the invention.

**Figure 1B** is a block diagram of an exemplary hardware configuration of the computer of **Figure 1.**

**Figure 1C** is an illustration of an exemplary memory medium suitable for storing program and data information in accordance with the invention.

**Figure 1D** is a block diagram of a network architecture suitable for carrying data and programs in accordance with some aspects of the invention.

**Figure 2** is a flow chart of a high level process for carrying out one embodiment of the invention.

**Figure 3** is a flow chart of a process for identifying video clips relevant to a user's query.

**Figure 4** is a flow chart of a high level process for creating a gallery of selected images from video clips relevant to a user's query.

**Figure 5** is a flow chart of an initial step for selecting an image to represent a portion of a video clip relevant to a user's query.

**Figure 6** is a diagram illustrating raster scanning used with the transmission of closed-captioned information.

**Figure 7** is an illustration of an exemplary closed-captioned display.

**Figure 8** is a flow chart of a process for indexing video clips using closed-captioned information.

**Figure 9** is an illustration of sequential images and portions of text sent as closed-captioned information on the vertical retrace interval of each frame.

**Figure 10** is an exemplary database layout used for indexing closed-captioned terms with corresponding image frames.

**Figure 11** is an exemplary database layout used for indexing sentences of closed-captioned information with respect to related positions on a video clip.

**Figure 12** is a flow chart of one embodiment of a process for selecting a representative image of a video clip.

**Figure 13** is a flow chart of a second embodiment of a process for selecting a representative image of a video clip.

**Figure 14** is a flow chart of a process for preparing a representative image for display in thumbnail form.

**Figure 15** is a flow chart of a process for creating a two-dimensional array of thumbnail images.

**Figure 16** is an exemplary array of relevance ranked representative images.

### NOTATIONS AND NOMENCLATURE

The detailed descriptions which follow may be presented in terms of program procedures executed on a computer or network of computers. These procedural descriptions and representations are the means used by those skilled in the art to most effectively convey the substance of their work to others skilled in the art.

A procedure is here, and generally, conceived to be a self-consistent sequence of steps leading to a desired result. These steps are those requiring physical manipulations of physical quantities. Usually, though not necessarily, these quantities take the form of electrical or magnetic signals capable of being stored, transferred, combined, compared, and otherwise manipulated. It proves convenient at times, principally for reasons of common usage, to refer to these signals as bits, values, elements, symbols, characters, terms, numbers, or the like. It should be noted, however, that all of these and similar terms are to be associated with the appropriate physical quantities and are merely convenient labels applied to these quantities.

Further, the manipulations performed are often referred to in terms, such as adding or comparing, which are commonly associated with mental operations performed by a human operator. No such capability of a human operator is necessary, or desirable in most cases, in any of the operations described herein which form part of the present invention; the operations are machine operations. Useful machines for performing the operation of the present invention include general purpose digital computers or similar devices.

The present invention also relates to apparatus for performing these operations. This apparatus may be specially constructed for the required purpose or it may comprise a general purpose computer as selectively activated or reconfigured by a computer program stored in the computer. The procedures presented herein are not inherently related to a particular computer or other apparatus. Various general purpose machines may be used with programs written in accordance with the teachings herein, or it may prove more convenient to construct more specialized apparatus to perform the required method steps. The required structure for a variety of these machines will appear from the description given.

### DESCRIPTION OF THE PREFERRED EMBODIMENT

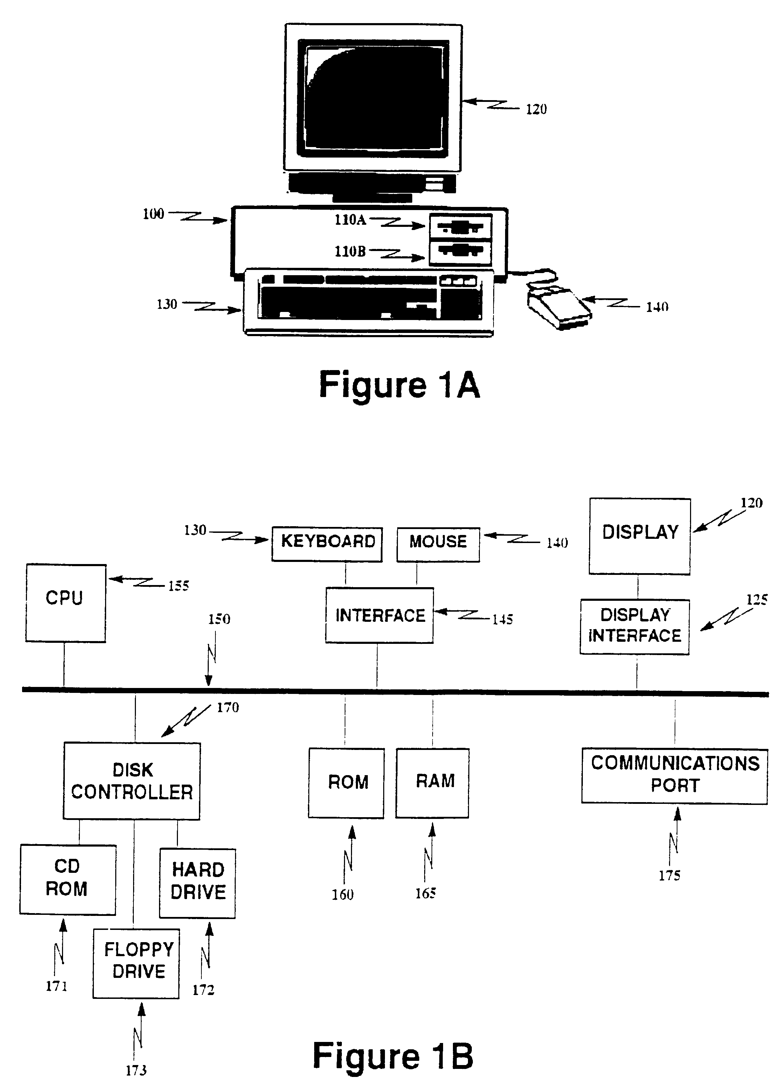

**Figure 1A** illustrates a computer of a type suitable for carrying out the invention. Viewed externally in **Figure 1A**, a computer system has a central processing unit **100** having disk drives **110A** and **110B**. Disk drive indications **110A** and **110B** are merely symbolic of a number of disk drives which might be accommodated by the computer system. Typically, these would include a floppy disk drive such as **110A**, a hard disk drive (not shown externally) and a CD ROM drive indicated by slot **110B**. The number and type of drives varies, typically, with different computer configurations. The computer has the display **120** upon which information is displayed. A keyboard **130** and a mouse **140** are typically also available as input devices. Preferably, the computer illustrated in **Figure 1A** is a SPARC workstation from Sun Microsystems, Inc.

**Figure 1B** illustrates a block diagram of the internal hardware of the computer of **Figure 1A.** A bus **150** serves as the main information highway interconnecting the other components of the computer. CPU **155** is the central processing unit of the system, performing calculations and logic operations required to execute programs. Read only memory (**160**) and random access memory (**165**) constitute the main memory of the computer. Disk controller **170** interfaces one or more disk drives to the system bus **150**. These disk drives may be floppy disk drives, such as **173**, internal or external hard drives, such as **172,** or CD ROM or DVD (Digital Video Disks) drives such as **171**. A display interface **175** interfaces a display **120** and permits information from the bus to be viewed on the display. Communications with external devices can occur over communications port **185**.

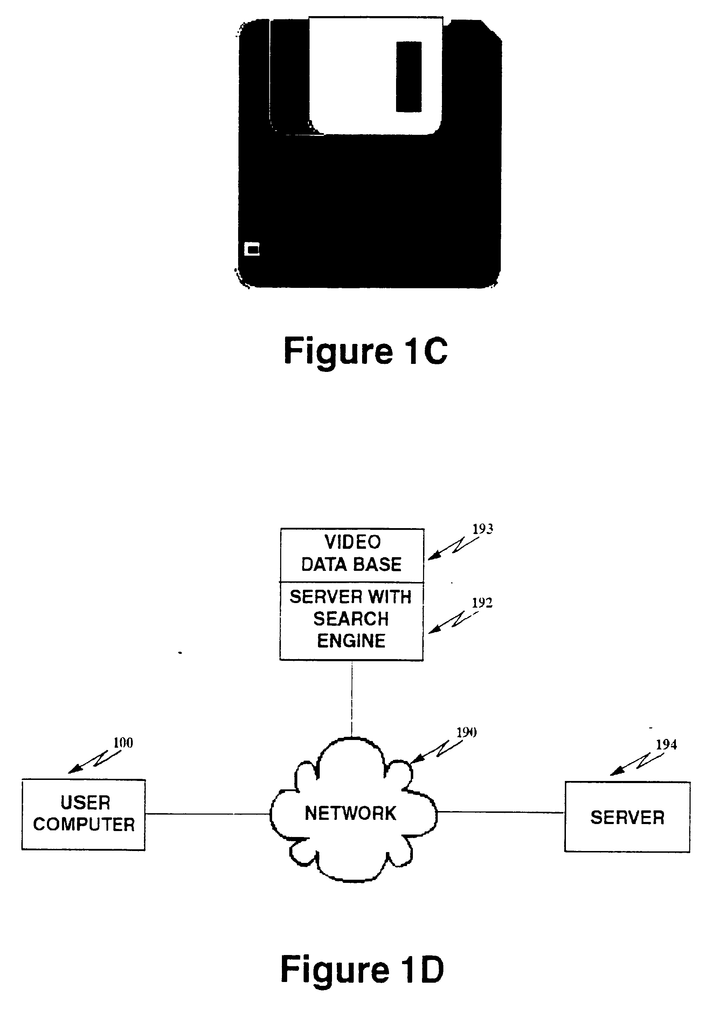

**Figure 1C** illustrates an exemplary memory medium which can be used with drives such as **173** in **Figure 1B** or **110A** in **Figure 1A.** Typically, memory media such as a floppy disk, or a CD ROM, or a Digital Video Disk will contain the program information for controlling the computer to enable the computer to perform its functions in accordance with the invention.

**Figure 1D** is a block diagram of a network architecture suitable for carrying data and programs in accordance with some aspects of the invention. A network **190** serves to connect a user computer **100** with either a server **192** having a search engine which searches a video database **193** or, alternatively, with a general server for the download of program and data information.

In operation, user computer **100** can log on to the server **192** in order to conduct a search of the video database **193**. When the search is completed, a set of representative images are returned to the user, preferably in relevance ranked order, for viewing by the user and for selection of desired images.

In a different operational mode, the network **190** can connect to user computer **100** with a server such as **194** to download program and data information needed for carrying out the invention.

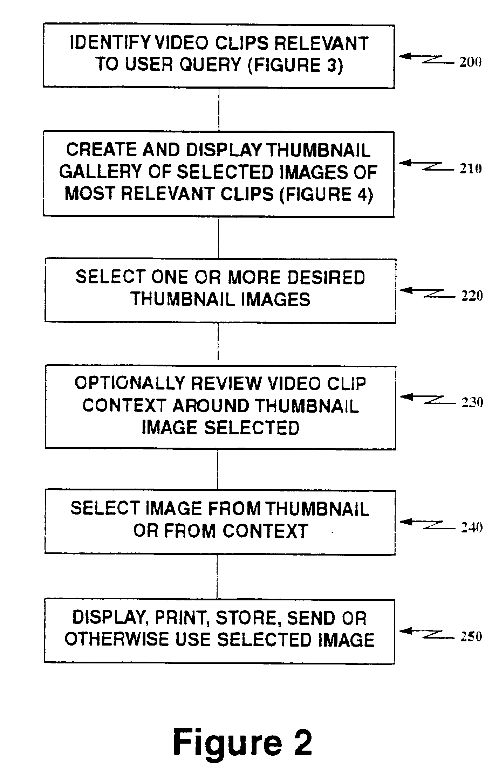

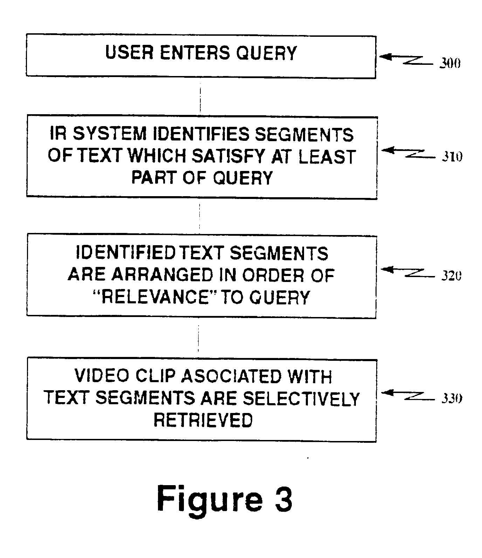

**Figure 2** is a flow chart of a high level process for carrying out one embodiment of the invention. In response to a user query, a search engine identifies video clips relevant to the user's query (**200**). This portion of the process is described more in detail in conjunction with **Figure 3.**

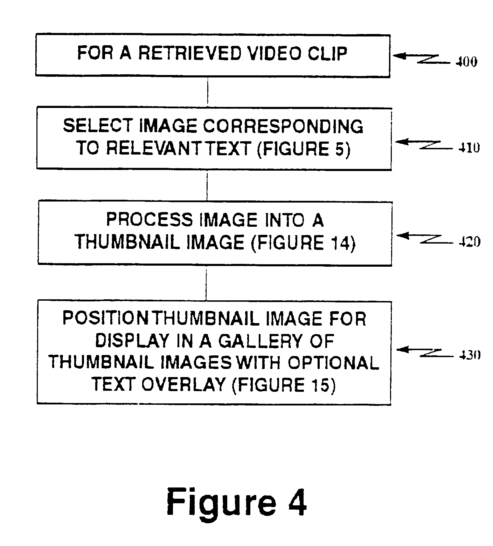

The search hits which satisfy a user's query are, preferably, arranged in a relevance ranked order. To facilitate a user selection of desired images, selected images of the relevance ranked video clips are processed for display into a thumbnail gallery or array of thumbnail versions of the identified images. Typically, the first N images will be displayed in thumbnail form with additional pages to follow if the desired images are not found in the initial gallery presented. This process is described more in conjunction with **Figure 4.**

When the galleries of thumbnail images of the most relevant video clips have been displayed, a user will select one or more of those images for further consideration (**220**). Optionally, the user may request to view the video clip together with the context around the thumbnail image selected (**230**). The user then selects one or more images from the thumbnail gallery or from the context displayed (**240**) for display, printing, storage, transmission, or other use (**250**).

**Figure 3** is a flow chart of a process for identifying video clips relevant to a user's query. The user enters the query by typing in search terms in the usual fashion (**300**). The information retrieval (IR) system identifies segments of text which satisfy at least part of the query (**310**). The text segments are then arranged in an order of "relevance" to the query (**320**). The video clip or portions of the video clip that are associated with relevant text segments are selectively retrieved for further processing as described more hereinafter (**330**).

The preferred form for indexing and retrieval of information is that disclosed in U.S. Patent Application Serial No. 08/499,268, filed July 7, 1995 by William Woods and entitled METHOD AND APPARATUS FOR GENERATING QUERY RESPONSES IN A COMPUTER-BASED DOCUMENT RETRIEVAL SYSTEM (Attorney Docket No. P-978) . Alternatively, or collectively, the techniques disclosed by William Woods in the following applications may also be applied. U.S. Patent Application Serial No. 08/829,635, filed March 31, 1997 and entitled METHOD AND APPARATUS FOR DISTRIBUTED INDEXING AND RETRIEVAL (Attorney Docket No. P2103); U.S. Patent Application Serial No. 08/829,657, filed March 31, 1997 and entitled CASCADED INDEXING FOR IMPROVING SEARCH AND RETRIEVAL (Attorney Docket No. P2104); and U.S. Patent Application Serial No. , filed March 31, 1997 and entitled METHOD AND APPARATUS FOR GENERATING QUERY RESPONSES IN A COMPUTER-BASED DOCUMENT RETRIEVAL SYSTEM (Attorney Docket P978A). Each of these is hereby incorporated by reference in its entirety herein.

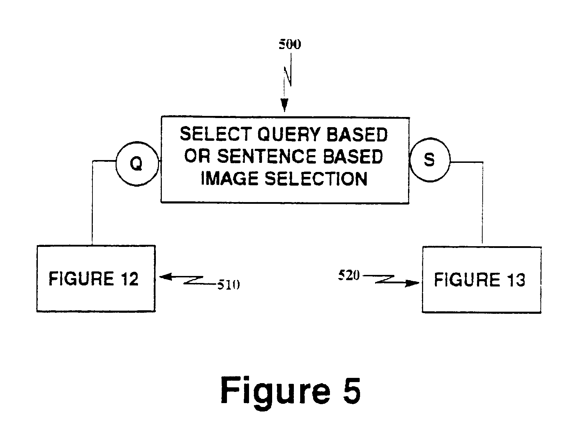

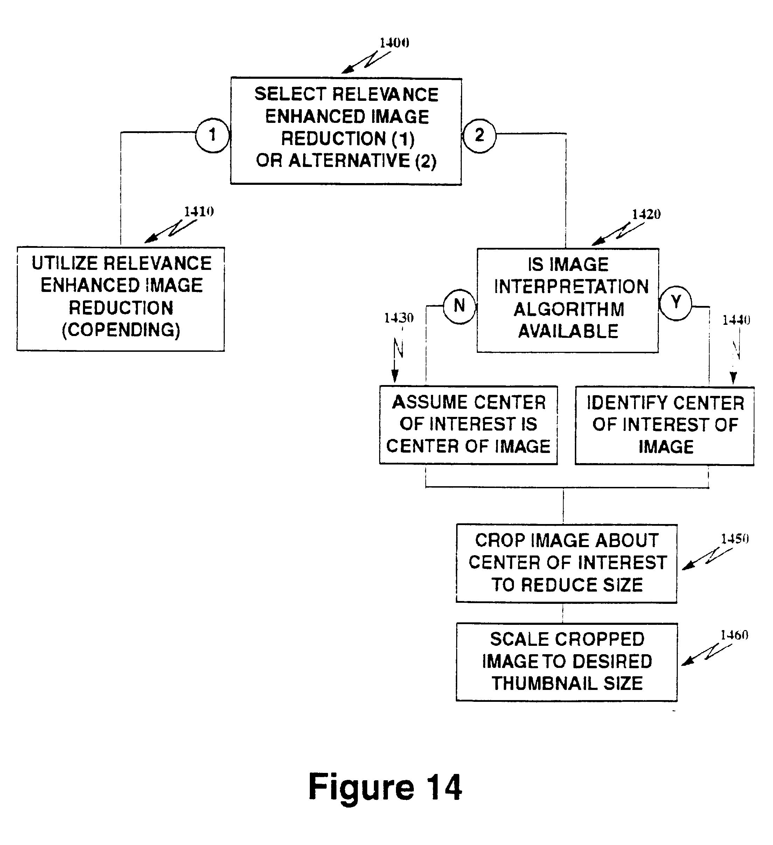

**Figure 4** is a flow chart of a process for creating a gallery of selected images from video clips relevant to a user's query. For each video clip identified as relevant to a user's query (**400**) (i.e. for each bit), a representative image is selected which corresponds to the relevant text (**410**) as more fully described in conjunction with **Figure 5**. The representative image is processed into a thumbnail image (**420**) as more fully described in conjunction with **Figure 14.**

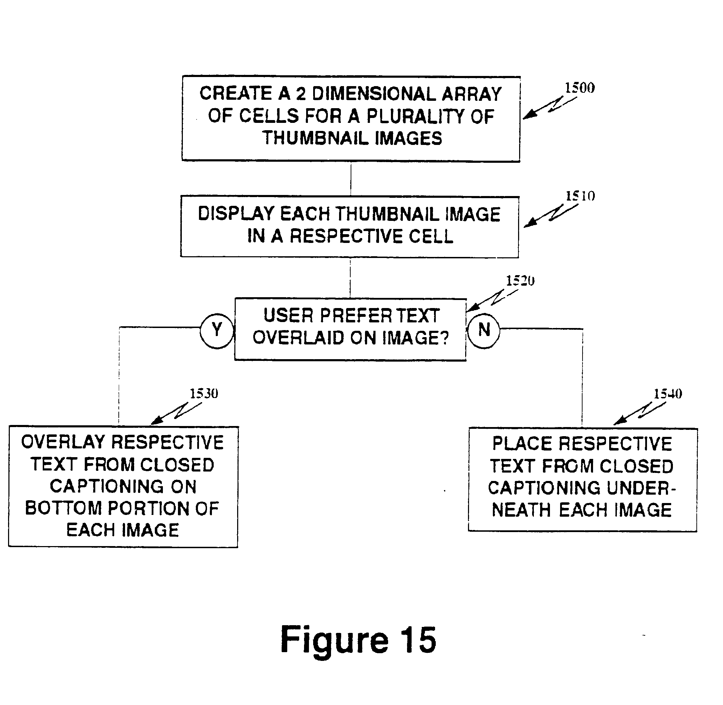

The thumbnail image thus created is positioned for display in a gallery of thumbnail images with an optional text overlay (**430**) as more fully described in conjunction with **Figure 15**.

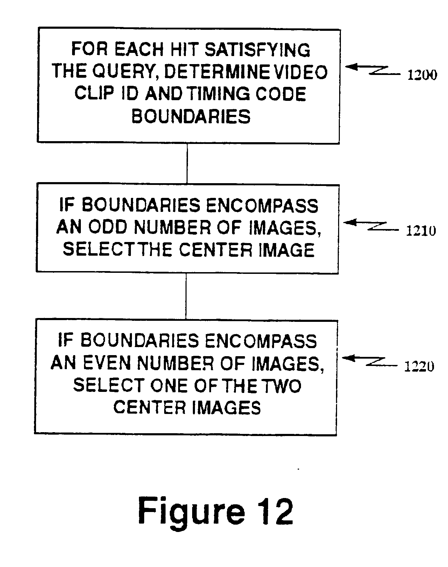

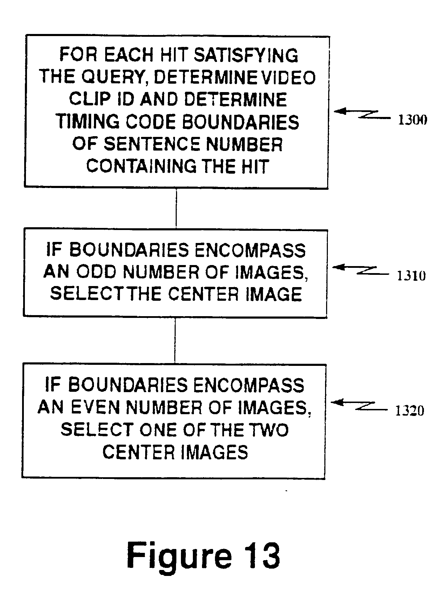

**Figure 5** is a flow chart of an initial step for creating an image to represent a portion of a video clip relevant to a user's query. There are two alternative methodologies for selecting a representative image. The one described in conjunction with **Figure 12** (**510**) is query based, that is, the terms in the query are utilized to identify a representative image for display. In the alternative described more in conjunction with **Figure 13** (**520**) the selection of the representative image is based upon the sentence containing the term(s) which correspond to the user's query. **Figure 5** permits a user to select between these two modes of presentation at step **500**.

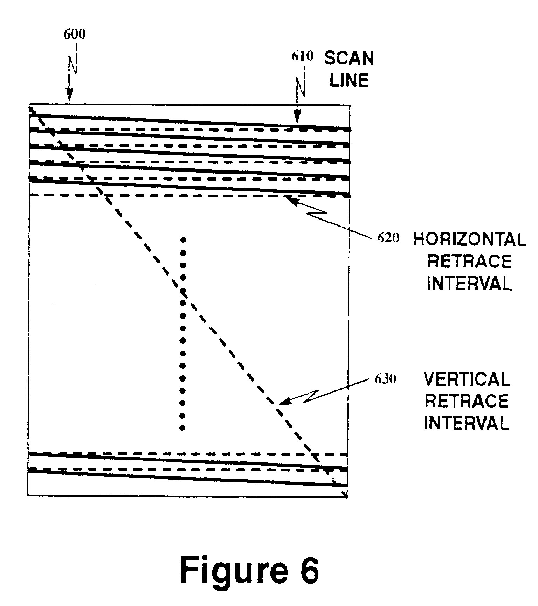

**Figure 6** is a diagram illustrating raster scanning used with the most common form of transmission of closed-captioned information. In **Figure 6**, a video display **600**, such as a cathode ray tube, has image information displayed thereon by a plurality of scan lines **610.** That is, one or more electron beams scans across the face of the display **600** repetitively in a series of scan lines, activating a phosphorous element or respective phosphorous element as a function of the intensity of the optical output desired. When the electron beam reaches the right-hand extent of the screen, it needs to retrace back to the left-hand side to begin the scan of the next line. An example of the horizontal retrace is shown as item **620**. When the electron beam reaches the bottom of the screen, it must be deflected back up to the top left-hand corner of the screen to resume the scanning for the next frame. It is during this vertical retrace interval, that closed-captioning is typically transmitted. It is of course possible to transmit such information on a separate channel, such as an addressed datastream instead of transmitting the closed-captioned information on the vertical retrace interval. Nevertheless, closed-captioning in its common implementations utilize the vertical retrace interval.

In the U.S., interlaced scanning is commonly utilized for commercial television, that is, every other line is scanned during a first frame or first pass over the display surface and the other lines are transmitted during a subsequent pass or frame over the surface of the display. This tends to reduce the perceptible flicker on the screen. As a result, when this type of transmission is utilized, two frames are required to represent a single image. As a result, there are also two vertical retrace intervals during which closed-captioned information can be transmitted. Normally, closed-captioning information is sent on only one vertical retrace interval of the two interlaced scans although one could use both vertical retrace intervals. The second frame has been proposed for use for extended data services such as data related to the visual content and not related to the audio track of the video clip. If this approach is taken, then two sets of information can be stored and related to the particular image being sent and thus more information is available for indexing the video clip.

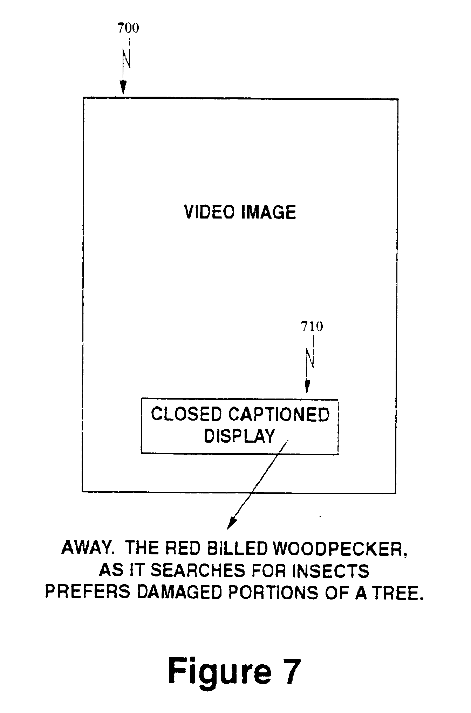

**Figure 7** is an illustration of an exemplary closed-captioned display. The display **700** contains a video image represented by the textual phrase "video image." Overlaid on the video image is a closed-captioned display area **710.** In the example shown in Figure 7, exemplary text from a closed-captioned display is shown beneath the display **700**. The closed-captioned display area **710** is used to scroll textual information representing information contained on the audio track of the video programming being displayed for those who might be unable to hear or for those who have chosen to mute the audio portion of programming. The text shown beneath the display **700** will be utilized as an example throughout the remainder of this description.

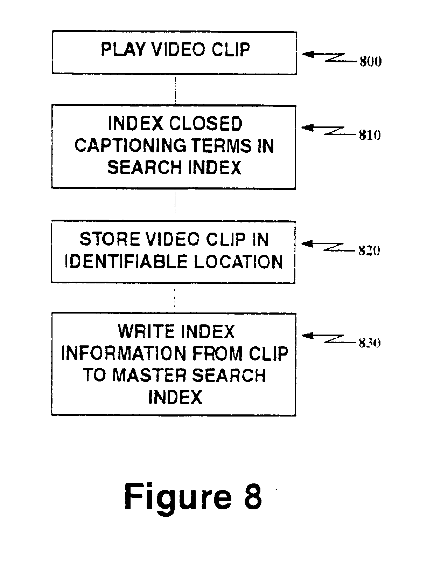

**Figure 8** is a flow chart of a process for indexing video clips using closed-captioned information. First, the video clip is played (**800**) and the terms received over the closed-captioning channel are indexed into a search index. A typical search index would be an inverted index for relating individual terms to the portion of the video clip where the term occurs. Individual video clips are stored in identifiable locations from which they can be retrieved for display and/or playback (**820**). The index information received from the video programming or video clip is written to the master search index where it is utilized to retrieve portions of the video clips that are relevant to the user's query (**830**).

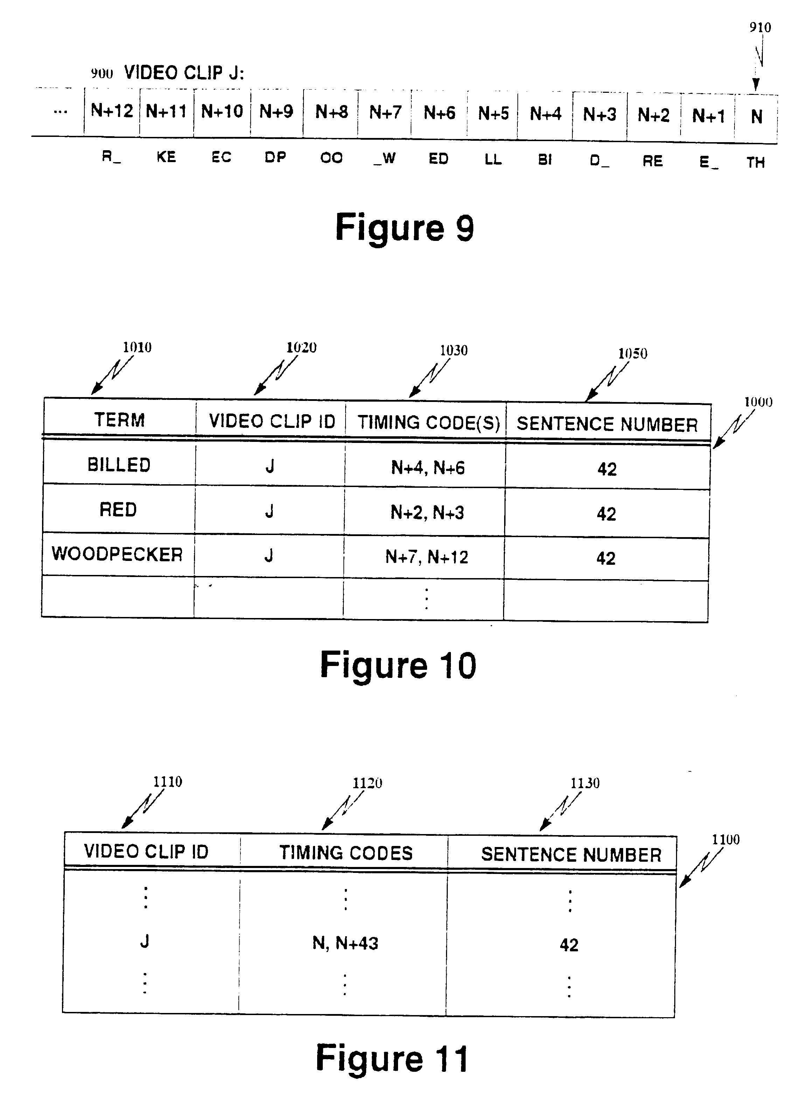

**Figure 9** is an illustration of sequential images and portions of text sent as closed-captioned information on the vertical retrace interval of each image. As illustrated in **Figure 9**, each image N through N+12 shown from video clip J (**900**) constitutes a full image. That is, if interlace scanning is utilized, each cell represents two interlaced frames. A portion of the text shown in the example of **Figure 7** is shown as it is transmitted over closed-captioning in **Figure 9.** The vertical retrace interval of a particular frame typically sends only two characters. Thus, the portion of the sentence illustrated in **Figure 7,** namely "the red billed woodpecker" is transmitted using images N through N+12. This assumes only one vertical retrace interval is used for each image although, two may be available if interlaced scanning is utilized.

**Figure 10** is an exemplary database layout used for indexing closed-captioned terms with corresponding image frames. A database **1000** includes fields **1010** which relate to the closed-captioned terms, field **1020** which relates to the video clip identification, field **1030** which relates to the timing codes (specifically the beginning and ending timing code) utilized to identify portions of a video clip and field **1040** relates to a sentence number for textual information contained in closed-captioning. When comparing the representations of **Figure 10** and **Figure 9**, one notes that the word "the" is not stored in the database **1000**. It is customary not to index words which occur so frequently that they have little discrimination value for distinguishing between different textual content. As shown in **Figure 7**, the terms billed, red and woodpecker are found in video clip J. They are found between certain timing code addresses within the video programming or video clip. The timing codes can be, for example, SMPTE codes (Society of Motion Picture and Television Experts) which are applied to identify portions of a video presentation. Alternatively, they could be timing codes applied on a separate track or embedded within the video information. The important thing is that the timing codes enable one to relate a particular term of the closed-captioned presentation with the portion of the video presentation with which it is related. A sentence number, in this case **42**, is utilized to identify a particular sentence in the closed-captioning presentation. As discussed more hereinafter, it is sometimes desirable to identify a image based on the term, whereas in other instances, it may be desirable to locate images based on the sentence in which certain search terms occur.

**Figure 11** is an exemplary database layout used for indexing sentences of closed-captioned information and related positions on a video clip. This database layout is similar to that of **Figure 10** except that the purpose is to identify the beginning and ending timing codes for a particular sentence of closed-captioned material on the video clip. When sentences, rather than terms, are utilized for identifying portions of a video clip, the detailed information relating to the starting and ending timing codes for each term are not necessary. However, the beginning and ending timing codes for each sentence are necessary. The use of these two modes will be discussed more hereinafter.

**Figure 12** is a flow chart of one embodiment of a process for selecting a representative image of a video clip. In accordance with **Figure 12**, for each hit satisfying the query, the video clip ID in which the hit resides is determined as well as the timing code boundaries for the hit (**1200**). If the boundaries encompass an odd number of images (**1210**) the center image will be selected as the representative image. With the boundaries in compass in an even number of images, one may select either of the two center images as the representative image (**1220**).

An example will illustrate this. Referring to **Figure 9**, if the query were "red billed woodpecker", step **1200** would return the identification of the video clip (J), sentence "42" and the timing codes (N+2, N+12). N+2 represents the beginning of the closed-captioned transmission of the word "red" and N+12 represents the last letter of the word "woodpecker." There are thus eleven frames contained inclusively between N+2 and N+12. Thus, the center frame or frame N+7 would be selected as the representative frame for that query.

If, on the other hand, the user's query was merely "woodpecker" the search engine would return the video clip identification "J", sentence "42" and timing codes (N+7, N+12). There are six frames inclusively between timing codes N+7 and N+12. As a result, either frame N+9 or frame N+10 could be considered nearest the center. Either one of these may be selected for processing as the representative image. Note that each of the queries in these examples will return other film clip identifications which one or more of the terms of the search query. Thus, there may be other film clips with "red billed woodpecker" in their closed-captioning or, with less relevance, "red billed ducks." Similarly, in the second example, there may be other film clips which return representative images which relate to the query term "woodpecker" in the closed-captioning.

**Figure 13** is a flow chart of a second embodiment of a process for selecting a representative image of a video clip. For each hit satisfying the search query, at least in part, the identification of the video clip is determined as well as the timing code boundaries of the sentence number containing the hit (**1300**). As before, if the boundaries encompass an odd number of images, the center image is selected (**1310**). If the boundaries encompass an even number of images, one of the two center images is selected (**1320**).

**Figure 14** is a flow chart of a process for preparing a representative image for display in thumbnail form. One form utilizes the disclosure of co-pending U.S. Application Serial No. , filed and entitled (Attorney Docket No. P-1212). The other one (**1400-2**) functions in two different ways, depending on whether an image interpretation algorithm is available (**1420**). If it is not (**1420-N**), one assumes that the center of interest in the image is also the center of the image (**1430**). If an image interpretation algorithm is available (**1420-Y**), it will be utilized to identify the center of interest for the image (**1440**). The image is then cropped about the center of interest to reduce the size (**1450**). Typically, it is cropped to an amount about 80% of its original height and width. This eliminates the generally less relevant information at the edges of the image. The cropped image is then scaled to reduce it to the desired thumbnail size (**1460**).

**Figure 15** is a flow chart of a process for creating a two-dimensional array of thumbnail images. First, a two-dimensional array of cells is created to receive a plurality of thumbnail images (**1500**). Thumbnail images identified and prepared as discussed above are then placed into respective cells of the array of cells (**1510**). Preferably, the array is created and populated using an HTML table with appropriate pointers to the thumbnail images. It is also preferred, to place the images within the array in a left-to-right, top-to-bottom manner so that the more relevant images tend to be toward the upper left portion of the presentation and so that the images are arranged in a left-to-right, top-to-bottom priority order based on relevance ranking. The user has the option to overlay the text of the closed-captioning on the thumbnail image itself (**1520-Y**) or to place it below the image (**1520-N**).

Placing the overlay over the bottom portion of the thumbnail image has the advantage that a more compact representation can exist and is generally preferred.

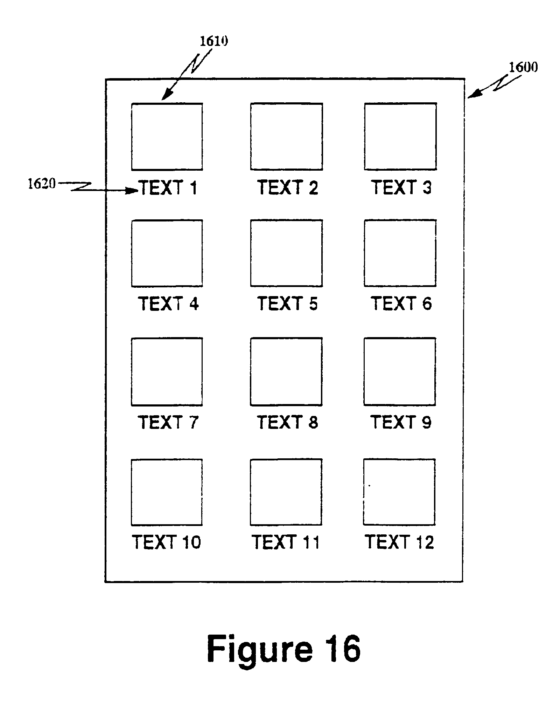

**Figure 16** is an exemplary array of relevance ranked representative images. The images are shown as they might be on a display **1600** in a graphical user interface form. A plurality of cells **1610** are defined in which the thumbnail images may be placed in a relevance ranked manner as described above. The overlaid text is shown, in **Figure 16**, placed beneath the thumbnail image. As discussed above, it may also be placed as an overlay within the image cell **1610** itself. The display of thumbnail images shown in **Figure 16** may represent one page of plural pages of thumbnail images, with each thumbnail image being a representative image of the content of one video clip which was identified as being relevant to the user query.

In the usual fashion, the user may identify a particular one or more of the images displayed as relevant and needed for further work. The user may select these images, in the usual fashion, by clicking on the images and, for example, dragging and dropping them on to a workspace window for further processing. By presenting the results of a video or visual database in a visual manner, much more information is communicated in a shorter period of time than would be required if each user had to retrieve each video clip and play the video clip to identify the portion thereof which might be relevant to the query.

In this way, user access to video information is greatly enhanced and facilitated in ways which overcome the problems of the prior art.

Although the present invention has been described and illustrated in detail, it is clearly understood that the same is by way of illustration and example only and is not to be taken by way of limitation, the spirit and scope of the present invention being limited only by the terms of the appended claims and their equivalents.

## Claims

1. Computer apparatus, comprising:
a. a computer having a display,
b. a database of video images, and
c. a user interface, running on said computer, for presenting a selected representative image of each video presentation stored in said database and identified as relevant to a user query, in a respective cell of an array of images of reduced size.

2. Apparatus of claim 1 in which the database of video images is indexed using closed captioning text.

3. Apparatus of claim 2 in which each image of reduced size is displayed with the closed captioning text that resulted in the identification of the video presentation as relevant to the user query.

4. Apparatus of claim 3 in which the text is overlaid on the bottom portion of the image of reduced size.

5. Apparatus of claim 4 in which the text is displayed beneath the image of reduced size.

6. Apparatus of claim 5 in which the representative image is a cropped and scaled version of an image from the video presentation.

7. Apparatus of claim 6 in which the representative image is selected from images that were displayed during the sending of one or more closed captioned terms found in the user query.

8. Apparatus of claim 7 in which the representative image is selected to be substantially the center image of sequential images displayed during the sending of the closed captioned terms found in the user query.

9. A method of displaying images representing video components identified from a video database in response to a user query, comprising the steps of:
a. selecting a representative image from each identified video component;
b. scaling the representative image to a reduced size; and
c. presenting scaled representative images as an array for review by the user.

10. The method of claim 9 in which the step of scaling also includes the step of cropping the image before scaling.

11. The method of claim 10 in which cropping the image is centered on the center of interest in the image as determined by an image analysis algorithm.

12. The method of claim 9 in which said array is organized in an order that reflects relevance to the user query.

13. A method of selecting representative images from video presentations, comprising the steps of:
a. identifying a portion of a video presentation during which terms relevant to a user query are located; and
b. selecting as a representative image an image from an identified portion of the video presentation.

14. The method of claim 13 in which the center image from the identified portion is selected.

15. A system for displaying images from a video database, comprising:
a. a network;
b. a server, connected to said network, having a search engine for searching a video database; and
c. a user computer, connected to said network, for submitting search queries to said server and receiving video information from said server;
d. in which at least one of said user computer or said server is configured to present reduced sized representative images of video components contained within said database as an array to said user.

16. The computer program product of claim 14 in which each image of said array is displayed in proximity to closed-captioned text related to that image.

17. A computer program product comprising:
a. a memory medium; and
b. a computer program, stored on said memory medium, said computer program comprising instructions for selecting a representative image from identified video component, scaling the representative image to a reduced size; and presenting scaled representative images as an array for review by the user.

18. The computer program product of claim 14 in which each image of said array is displayed in proximity to closed-captioned text related to that image.

19. A computer program product comprising:
a. a memory medium; and
b. a computer program, stored on said memory medium, said computer program comprising instructions for identifying a portion of a video presentation during which terms relevant to a user query are located, and selecting as a representative image an image from an identified portion of the video presentation.
